# EUROPEAN PATENT SPECIFICATION

(11) **EP 1 370 016 B1**
(45) Date of publication and mention of the grant of the patent: **20.04.2005**
(21) Application number: 02012733.8
(22) Date of filing: 07.06.2002
(51) Int. Cl.: H04H 1/00, H04L 1/20, H04L 27/00, H04B 7/08

(54) **Method and apparatus for the reception of an audio signal transmitted both in analogue and in higher-quality digital modulation, gradually varying the mixing ratio from digital to analogue in case of poor channel conditions, so as to make the change less perceptible**
Verfahren und Vorrichtung zum Empfang eines gleichzeitig in analoger und digitaler Modulation übertragenen Audiosignales, mit allmählicher Umblendung von digital auf analog bei schlechter Kanalgüte, um den Wechsel weniger wahrnehmbar zu machen
Procédé et appareil pour la réception d'un signal audio transmis à la fois en modulation analogique et numérique d'une qualité supérieure, avec une commutation graduelle du digital au numérique en cas de mauvais état du canal, de façon à rendre le changement moins perceptible

(43) Date of publication of application: 10.12.2003
(73) Proprietor: Sony International (Europe) GmbH, 10785 Berlin (DE)
(72) Inventor: Wildhagen, Jens, Sony International (Europe) GmbH, 70327 Stuttgart (DE); Schill, Dietmar, Sony International (Europe) GmbH, 70327 Stuttgart (DE)
(74) Representative: Müller - Hoffmann & Partner

(56) References cited:
- EP-A- 0 954 131
- EP-A- 1 041 757
- US-A- 5 666 660
- US-A- 5 809 065

## Description

The present invention relates to a receiver for receiving simultaneously a digital signal and an analogue signal, whereby the same audio program is transmitted via said two signals. Further, the invention relates to a method for switching or sliding from a digital signal to an analogue signal and vice versa in a receiver.

In recent years, a lot of different standards for the digital transmission of broadcast signals, such as DRM (Digital Radio Mondiale), DAB, ISDB-Tn, IBOC, XM sirius, etc. have been introduced. Most radio receivers are not capable of decoding these digital broadcast signals yet. For this reason, most these digital signals are transmitted together with a conventional analog signal (AM or FM signal), whereby the same audio program is transmitted via both signals simultaneously. Preferably, a so-called simulcast signal is transmitted, which permits to transmit the analogue signal and the digital signal simultaneously via the same channel. If a receiver is capable of decoding the digital signal, it can do so. Conventional receivers may at the same time demodulate the conventional AM or FM signal.

In the US patent 5,809,065 to M. J. Dapper et al., a receiver for demodulating both the analogue signal and the digital signal of a composite analogue/digital signal is disclosed. In dependence of the signal-to-noise ratio of the received composite signal, the receiver switches from the analogue signal to the digital signal and vice versa.

In the European Patent publication. EP1233556, published on 21.08.2002, i.e. after the filing date of the present application, a receiver is described which comprises two tuners, whereby the first tuner provides a first output signal and the second tuner provides a second output signal. The receiver comprises a switch for switching between said two output signals. The receiver comprises an amplitude adjustment unit for controlling the respective amplitudes of said two output signals in a way that they are of equal magnitude. Furthermore, the receiver comprises a delay unit for compensating a time delay between said two output signals. When switching from said first output signal to said second output signal, or back to said first output signal, the amount of audible distortions is reduced because the volume of the audio signal does not change, and the time delay is eliminated.

The switching still leads to annoying distortions, though. When a digital signal and an analogue signal are simultaneously received by a receiver which is capable of switching between said two signals, the demodulated analogue signal will sound completely different from the decoded digital signal. The decoded digital signal sounds rich and full, while the demodulated analogue signal sounds comparatively flat. Furthermore, the noise level of said demodulated analogue signal is much higher than the noise level of the digital signal. For these reasons, switching from one broadcast system to a different broadcast system still causes audible distortions which are annoying for a listener. Often, the reception of the digital signal is disturbed and the digital signal fades away in regular time intervals. In this case, the receiver will frequently switch between two different sounds and two different noise levels. The human auditory system soon gets used to a constant noise floor, but gets annoyed by a modulated noise floor.

European Patent Publication EP1041757 discloses a receiver allowing simultaneous reception of two audio broadcasting signals, comprising switching means for switching between both signals in dependence of the reception situation, a level difference detecting portion for detecting a difference in level between the two signals and compensating means for compensating the difference in level and so reducing the audible distorsions

European Patent publication. EP 1211802 filed by the Applicant discloses a filter with tunable bandwidth that is used for neighbour channel suppression. The inventive filter comprises a filter unit with a fixed bandwidth, a first frequency shifter preceding said filter unit for shifting the signal to be filtered so that an unwanted signal part lies outside the passband of said filter, and a second frequency shifter succeeding said filter unit for compensating the frequency shift introduced by said first frequency shifter. The inventive filter is characterized by a single sideband reduction unit to reduce a signal to be filtered to a single sideband or vestigal single sideband thereof before it is input to said first frequency shifter.

It is an object of the invention to provide a receiver and a method for switching between an analogue signal and a digital signal, whereby the amount of audible distortions is further reduced.

The object of the invention is solved by a receiver according to claim 1 and by a method for switching or sliding from a digital signal to an analogue signal and vice versa according to claim 17. Preferred embodiments thereof are respectively defined in the respective following subclaims. A computer program product according to the present invention is defined in claim 27.

The inventive receiver receives simultaneously a digital signal and an analogue signal, whereby the same audio program is transmitted simultaneously via said two signals. The receiver comprises demodulation means for demodulating said analogue signal, and decoding means for decoding said digital signal. Furthermore, the receiver comprises switching means for switching or sliding from said digital signal to said analogue signal and vice versa in dependence of the reception situation, in order to select either said digital signal or said analogue signal as the major source of the receiver's audio output signal. The receiver comprises a sound control unit for modifying the audio bandwidth of said digital signal as a function of the reception situation.

The inventive method relates to switching or sliding from a digital signal to an analogue signal and vice versa in a receiver, whereby said two signals are received simultaneously, and whereby the same audio program is transmitted simultaneously via said two signals. Said switching is performed in dependence of the reception situation in order to select either said digital signal or said analogue signal as the major source of the receiver's audio output signal. The method comprises a step of modifying the audio bandwidth of said digital signal in dependence of the reception situation.

In a receiver that receives a digital signal and an analogue signal simultaneously, the quality of the received digital signal is monitored. As long as the quality of the digital signal is sufficient, the listener can enjoy the full, rich sound of digital audio. Digital audio is characterized by a large audio bandwidth of about 12 kHz and by a low noise level.

In case the reception of the digital signal gets more difficult, e.g. due to fading, the receiver will switch to analogue audio. Since the signal power of the analogue audio signal is much higher than the signal power of the digital signal, the receiver will be able to receive a strong analogue signal. Each time the receiver switches between the digital signal, which has an audio bandwidth of about 12 kHz, and the analogue signal, which has an audio bandwidth of only 4.5 kHz, the sound of the received audio output signal changes from a rich sound to a rather flat sound, or vice versa.

According to invention, the receiver comprises a sound control unit for modifying the audio bandwidth of said digital signal as a function of the reception situation. Before switching to analogue audio, the bandwidth of the digital signal is slowly decreased from 12 kHz to 4.5 kHz. When the receiver switches to analogue audio, this will not imply a sudden change of the sound quality any more. Switching can take place without audible distortions, and the listener won't even notice that it is no longer digital audio, but analogue audio he is listening to.

Preferably, said analogue signal and said digital signal are transmitted via the same transmission channel, as a simulcast signal. By using a so-called simulcast signal, it is possible to transmit a certain audio program simultaneously as an analogue signal and as a digital signal via the same channel. On part of the receiver, both signals can be obtained with a single tuner.

Preferably, in case the digital signal is selected as the major source of said audio output signal and the signal quality of said digital signal falls below a first predefined quality level, the receiver switches to the analogue signal as the major source of said audio output signal. Further preferably, the receiver switches back to the digital signal as the major source of said audio output signal, in case the analogue signal is selected as the major source of said audio output signal and the signal quality of said digital signal surpasses a second predefined quality level.

According to a preferred embodiment of the invention, said switching means switch from said digital signal to said analogue signal and from said analogue signal back to said digital signal in a sliding transition by continuously varying the mixing ratio according to which said two signals contribute to said audio output signal. By doing this, audible distortions due to instantaneous switching can be avoided. Instead, the noise level is varied smoothly, which is less annoying.

Preferably, in case the error rate of said digital signal exceeds a predefined threshold, said sound control unit reduces the audio bandwidth of said digital signal. A large error rate of the received digital signal indicates that it will not be possible to decode all the received data packets, and that it will probably be necessary to switch to the analogue signal. Therefore, it is advantageous to reduce the audio bandwidth of the digital signal beforehand in a way that it becomes equal to the audio bandwidth of the analogue signal. This means that the quality of the digital signal is decreased on purpose. When the situation arises that the receiver has to switch from the digital signal to the analogue signal, the switching will not imply a sudden change of the audio bandwidth any more. Because the audio bandwidth has already been smoothly decreased before, the listener will not notice a sudden change of the sound.

Preferably, in case of frequent occurrence of switching, said sound control unit reduces the audio bandwidth of said digital signal. Often, the digital signal is periodically lost due to fading. Each time the digital signal is lost, the receiver will switch to the analogue signal. This situation can be detected by counting how frequently switching occurs during a predefined period of time. In case of frequent switching, the bandwidth of the digital signal is reduced. When the bandwidth of digital audio is equal to the bandwidth of analogue audio, a regular blending from digital audio to analogue audio and back to digital audio is less annoying.

According to a preferred embodiment of the invention, in case of frequent occurrence of switching, when the receiver switches back to said digital signal as the major source of said audio output signal, a mixed signal obtained by combining said digital signal and said analogue signal is output instead of said original digital signal. While the noise level of the digital signal is low, the analogue signal has a comparatively large noise level. In case of frequent switching between said two signals, the modulation of the noise level is rather annoying for a listener. In fact, a constant large noise level would be less annoying than a modulated noise level. For this reason, the receiver outputs even in the short time periods of distortion free digital reception a combination of digital and analogue audio, in order to avoid a fluctuating noise level.

Preferably, said sound control unit comprises tunable bandwidth filter means, whereby the upper cut-off frequency of said filter means is varied as a function of the reception situation. The upper cut-off frequency of said tunable bandwidth filter determines the audio bandwidth of the digital signal.

Preferably, the audio bandwidth of said digital signal is modified in a sliding transition according to a ramp function. A sudden change of the digital signal's bandwidth would be perceived as an audible distortion. Therefore, the bandwidth of the digital signal has to be varied slowly.

According to a first preferred embodiment of the invention, said filter means are implemented as IIR filter means, whereby the filter coefficients are varied as a function of the reception situation. The IIR filter's upper cut-off frequency is determined by the filter coefficients. It is therefore possible to modify the cut-off frequency by varying the filter coefficients.

According to a second preferred embodiment of the invention, said filter means comprise a first complex mixer, a first complex lowpass filter, a second complex mixer, a second complex lowpass filter, and a third complex mixer. A complex lowpass filter can be realised as two real lowpass filters with identical coefficients.

According to a third preferred embodiment of the invention, said filter means comprise a single sideband reduction unit, a first frequency shifter, a lowpass filter, and a second frequency shifter. This third implementation allows to further reduce the calculation power by using a single sideband reduction unit.

Preferably, the receiver comprises time alignment means for compensating any time delay between the analogue signal and the digital signal in order to perform a time alignment of both signals. When decoding the digital signal, the decoder has to perform a deinterleaving of the data. For this reason, the digital signal is obtained with a time delay, whereas the demodulated analogue signal is immediately available. Said time alignment means compensate this time delay, which would otherwise cause audible distortions.

Further preferably, the receiver comprises amplitude adjustment means for scaling the respective amplitudes of said analogue signal and said digital signal such that they are equal. Thus, the volume of the audio signal remains constant when switching occurs.

Further preferably, the receiver comprises a time delay unit for delaying the analogue signal by an amount that compensates the processing time of said sound control unit. When the processing time is independent of the actual filter bandwidth, a constant delay can be chosen.

Additionally, a computer program product according to the present invention comprises computer program means adapted to perform the method steps as defined above when it is executed on a computer, digital signal processor or the like.

Further features, objects and advantages of the receiver and the method according to the present invention will be better understood from the following detailed description of three exemplary embodiments thereof taken in conjunction with the accompanying drawings, wherein
- **Fig. 1**: shows a block diagram of a receiver according to the invention, which comprises an analogue and a digital demodulation path;
- **Fig. 2**: shows a block diagram of a tunable bandwidth filter according to the third embodiment of the invention; and
- **Fig. 3**: shows different signals occurring in the signal flow of the tunable bandwidth filter shown in Fig. 2.

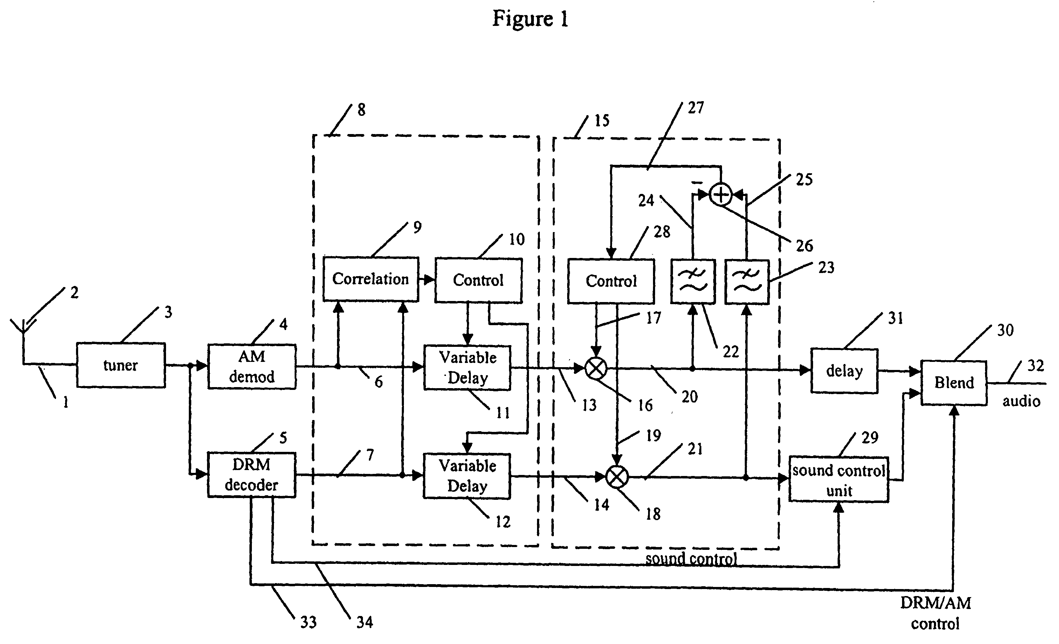

In Fig. 1, a block diagram of a receiver for a simulcast signal is shown. By means of a simulcast signal, it is possible to transmit a digitally encoded signal and an analogue modulated signal via the same transmission channel, whereby the same program is transmitted simultaneously by said analogue signal and said digital signal.

The transmitted signal 1 is received via the antenna 2 and forwarded to a tuner 3, which suppresses adjacent channels. The output of the tuner 3 is connected both to an analogue demodulator 4 and to a digital decoder 5. The analogue demodulator 4 demodulates the analogue signal component of the simulcast signal and generates a demodulated analogue signal 6. The audio bandwidth of said demodulated analogue signal 6 is, depending on the channel (MW, SW, LW), about 4.5 to 5 kHz.

The digital decoder 5 decodes the digital signal component of the simulcast signal. In order to reduce fading distortions of the wireless communications channel, the digital data of the digital signal has been interleaved in the transmitter. On part of the receiver, a deinterleaving of said data has to be performed, and for this reason, the decoded digital signal 7 is obtained with a time delay relative to the demodulated analogue signal 6.

Compared to the demodulated analogue signal 6, the audio bandwidth of the decoded digital signal 7 is about 12 kHz and therefore much higher than the audio bandwidth of the demodulated analogue signal 6. Furthermore, the noise level of the decoded digital signal 7 is considerably smaller than the noise level of the demodulated analogue signal 6.

Both the demodulated analogue signal 6 and the decoded digital signal 7 are input to a time alignment unit 8. Within the time alignment unit 8, both the demodulated analogue signal 6 and the decoded digital signal 7 are forwarded to a correlation unit 9, which calculates the correlation of said two signals as a function of the relative time delay between said two signals. The peak of the correlation indicates the time delay between said demodulated analogue signal 6 and said decoded digital signal 7. The correlation is forwarded to a control unit 10, which controls the variable delay unit 11 for the AM demodulation path and the variable delay unit 12 for the digital decoding path such that a time alignment of the demodulated analogue signal 6 and the decoded digital signal 7 is performed.

The aligned analogue signal 13 and the aligned digital signal 14 are forwarded to the amplitude adjustment unit 15, which scales the aligned analogue signal 13 and the aligned digital signal 14 in a way that the amplitudes of said two signals are of equal value. In order to accomplish this task, the amplitude adjustment unit 15 comprises two multipliers, a first multiplier 16 for multiplying the aligned analogue signal 13 with a first scaling factor 17, and a second multiplier 18 for multiplying the aligned digital signal 14 with a second scaling factor 19. At the respective outputs of the multipliers 16 and 18, the scaled analogue signal 20 and the scaled digital signal 21 are obtained.

The scaled analogue signal 20 is low-pass filtered by the filter unit 22, the scaled digital signal 21 is low-pass filtered by the filter unit 23, and the thus obtained filtered signals 24, 25 are subtracted from each other by means of a subtractor 26. The difference signal 27 is forwarded to the control unit 28. Within the control unit 28, said first scaling factor 17 and said second scaling factor 19 are modified such that the respective amplitudes of both the scaled analogue signal 20 and the scaled digital signal 21 approach the desired value.

The scaled digital signal 21 is forwarded via a sound control unit 29 to the switching unit 30. The scaled analogue signal 20 is connected to the time delay unit 31, which delays the scaled analogue signal 20 by an amount that compensates the processing time of the sound control unit 29, such that both signals are again aligned when they arrive at the switching unit 30.

Depending on the reception situation, either the analogue signal or the digital signal is selected as the major source of the audio output signal 32. The switching unit is controlled by a control signal 33 that is generated by the digital decoder 5. Within the digital decoder 5, the quality of the digital signal is monitored, e.g. by keeping track of the error rate. When the signal quality of the digital signal is not sufficient any more, the control signal 33 triggers that the switching unit 30 switches to the analogue signal, and the analogue signal becomes the major source of the audio output signal 32. As soon as the signal quality of the digital signal is acceptable again, the switching unit 30 will switch back to the digital signal.

According to the invention, the sound control unit 29 modifies the audio bandwidth of the scaled digital signal 21 as a function of the reception situation. When the error rate of the digital signal increases, it is likely that the receiver will soon switch to the analogue signal, and therefore, the sound control unit 29 will start to slowly reduce the audio bandwidth of the digital signal. Also in case of frequent switching, the audio bandwidth of the digital signal will be reduced. Both the error rate and the occurrence of switching are tracked by the digital decoder 5. The digital decoder 5 generates a sound control signal 34 that controls the audio bandwidth of the digital signal.

Preferably, the sound control unit is realized by means of a tunable bandwidth filter, whereby the filter's upper cut-off frequency determines the audio bandwidth of the digital signal. The cut-off frequency is varied according to the sound control signal 34.

There are different possible ways of implementing a tunable bandwidth filter. According to a first embodiment of the invention, the tunable bandwidth filter is realized as an IIR filter. The cut-off frequency depends on the values of the filter coefficients, and therefore, the filter's cut-off frequency can be varied by varying the filter coefficients.

According to a second embodiment of the invention, a tunable bandwidth filter is realized by means of a first complex mixer, a first sharp lowpass filter, a second complex mixer, a second sharp lowpass filter and a third complex mixer. The initial signal is frequency shifted by said first complex mixer. Next, the bandwidth of the first sideband of the shifted signal is reduced according to the first sharp lowpass filter's cut-off frequency. After shifting the signal by the second complex mixer, the bandwidth of the second sideband is reduced according to the second sharp filter's cut-off frequency. Last, the third complex mixer shifts the thus obtained signal back to the initial position. A tunable bandwidth filter according to this implementation allows to vary the bandwidth by selecting the mixing frequencies of said first, second and third complex mixers.

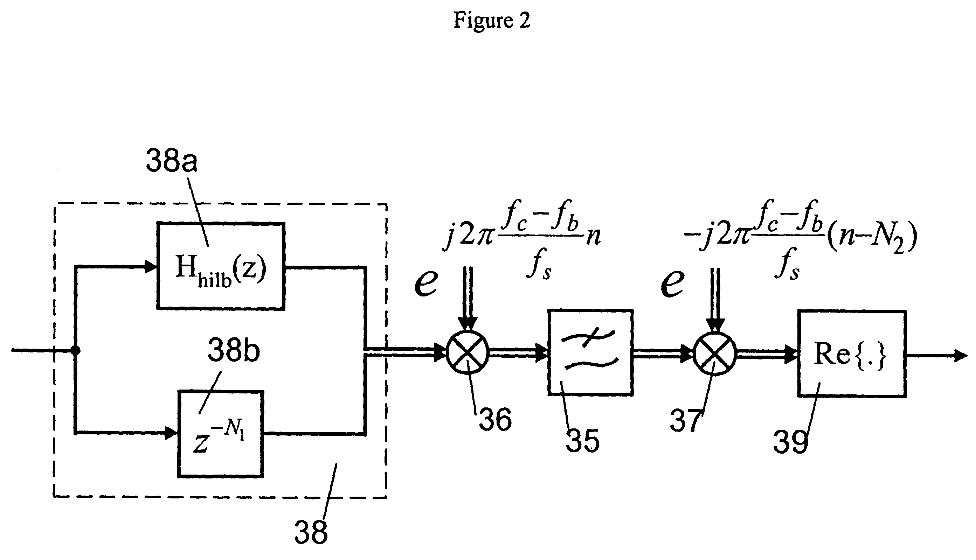

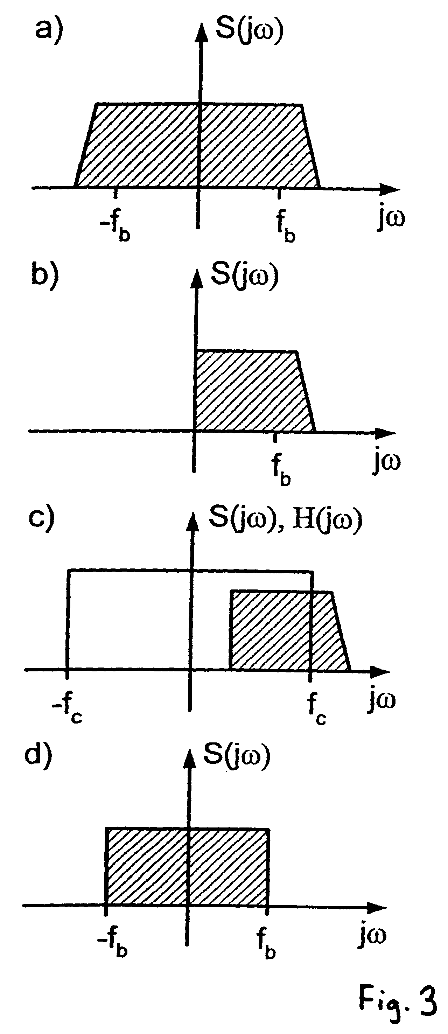

A third embodiment of the invention is shown in Fig. 2 and Fig. 3. In Fig. 2, the real valued input signal shown in Fig. 3 a) that shall be lowpass filtered with a bandwidth f_{b} is input to a single sideband reduction unit 38 to be reduced to one sideband. The resulting single sideband signal which is shown in Fig. 3 b) is input to a first frequency shifter 36 which is connected to the output of the single sideband reduction unit 38 to be shifted in the frequency domain by f_{c}-f_{b} so that f_{b} matches f_{c} which is the cut-off frequency of the lowpass filter 35. The lowpass filter 35 is connected to the output of the first frequency shifter 36. The frequency shifted single sideband signal and the transfer function of the lowpass filter 35 are shown in Fig. 3 c). After the lowpass filtering, the signal is shifted back by a second frequency shifter 37 that compensates the first frequency shift and the group delay N₂ of the lowpass filter 35. By determining the real part of the resulting signal (39), the wanted real valued signal reduced to the bandwidth f_{b} is obtained, as it is shown in Fig. 3 d). In this way, the bandwidth can be tuned very easily just by changing one parameter, i.e. the bandwidth f_{b}.

The single sideband reduction unit 38 shown in Fig. 2 comprises a Hilbert-filter 38a, i.e. a real filter, which receives the real valued input signal, whereby the output signal of said Hilbert-filter 38a represents the imaginary part of the single sideband signal. Further, the real valued input signal that undergoes a delay of N₁ in a delay element 38b, with said delay N₁ being equal to the group delay of the Hilbert-filter 38a, provides the real part of the single sideband signal. In the above description, the upper sideband is used to perform the filtering. Of course, instead the lower sideband can be used as well. In this case a multiplication of the output signal of the Hilbert-filter with -1 has to be performed additionally and the frequency shifts have to be realized in the opposite direction, respectively.

The requirements for the transfer function of the Hilbert-filter are very relaxed. It is not necessary to have a pure single sideband signal, it is sufficient to have a vestigial sideband signal which requires only shorter filters for the Hilbert-transform. If there is a minimum bandwidth |±f_{b,min}| defined for the tunable filter, the transition band can exploit the whole range from -f_{b.min} up to f_{b.min}. Moreover, ripples above a defined maximum bandwidth |±f_{b,max}| , i.e. below -f_{b,max} and/or above f_{b,max} with bandwidth |±f_{b,min}| < |±f_{b,max}| can be accepted.

Further, it is possible to subsample the single sideband signal due to its reduced bandwidth before shifting. Therefore, a sharper lowpass filtering can be applied and/or the calculation power for the mixers and the lowpass is reduced. The corresponding up-sampling can be done on the real valued output signal, i.e. after frequency shift, actual filtering and frequency shift and filter group delay compensation. The filter system is linear and has a linear phase, as no IIR filters need to be used. The filter can be easily implemented on a digital signal processor as no IIR filters are used that could cause problems in fixed point implementations. The Hilbert-transform and the lowpass filter can be realized as FIR filters that are very convenient and effective for DSP realization.

## Claims

1. Receiver for receiving simultaneously a digital signal and an analogue signal, whereby the same audio program is transmitted simultaneously via said two signals, comprising:
- demodulation means (4) for demodulating said analogue signal;
- decoding means (5) for decoding said digital signal;
- switching means (30) for switching or sliding from said digital signal to said analogue signal and vice versa in dependence of the reception situation, in order to select either said digital signal or said analogue signal as the major source of the receiver's audio output signal (32);
**characterized by**
- a sound control unit (29) for modifying the audio bandwidth of said digital signal as a function of the reception situation,
- wherein said sound control unit (29) is adapted in order to decrease the audio bandwidth of said digital signal with decreasing reception quality of said digital signal.

2. Receiver according to claim 1.
which is adapted to receive said analogue signal and said digital signal via the same transmission channel, as a simulcast signal.

3. Receiver according to claim 1 or 2,
which is adapted to switch to the analogue signal as the major source of said audio output signal in case the digital signal is selected as the major source of said audio output signal and the signal quality of said digital signal falls below a first predefined quality level.

4. Receiver according to any one of the preceding claims,
which is adapted to switch to the digital signal as the major source of said audio output signal in case the analogue signal is selected as the major source of said audio output signal and the signal quality of said digital signal surpasses a second predefined quality level.

5. Receiver according to any one of the preceding claims,
**characterized in that** said switching means are adapted to switch from said digital signal to said analogue signal and from said analogue signal back to said digital signal in a sliding transition by continuously varying the mixing ratio according to which said two signals contribute to said audio output signal.

6. Receiver according to any one of the preceding claims,
wherein said sound control unit is adapted to reduce the audio bandwidth of said digital signal in case the error rate of said digital signal exceeds a predefined threshold.

7. Receiver according to any one of the preceding claims,
wherein said sound control unit is adapted to reduce the audio bandwidth of said digital signal in case of frequent occurrence of switching,.

8. Receiver according to any one of the preceding claims,
which is adapted to output a mixed signal obtained by combining said digital signal and said analogue signal instead of said digital signal in case of frequent occurrence of switching, when the receiver switches back to said digital signal as the major source of said audio output signal.

9. Receiver according to any one of the preceding claims,
which is adapted to modify the audio bandwidth of said digital signal in a sliding transition according to a ramp function.

10. Receiver according to any one of the preceding claims,
**characterized in that** said sound control unit comprises tunable bandwidth filter means, whereby the upper cut-off frequency of said filter means is variable as a function of the reception situation.

11. Receiver according to claim 10,
**characterized in that** said filter means are implemented as IIR filter means, whereby the filter coefficients are variable as a function of the reception situation.

12. Receiver according to claim 10,
**characterized in that** said filter means comprise a first complex mixer, a first complex lowpass filter, a second complex mixer, a second complex lowpass filter, and a third complex mixer.

13. Receiver according to claim 10,
**characterized in that** said filter means comprise a single sideband reduction unit (38), a first frequency shifter (36), a lowpass filter (35), and a second frequency shifter (37).

14. Receiver according to any one of the preceding claims,
**characterized by**
time alignment means (8) for compensating any time delay between the analogue signal and the digital signal in order to perform a time alignment of both signals.

15. Receiver according to any one of the preceding claims,
**characterized by**
amplitude adjustment means (15) for scaling the respective amplitudes of said analogue signal and said digital signal such that they are equal.

16. Receiver according to any one of the preceding claims,
**characterized by**
a time delay unit (31) for delaying the analogue signal by an amount that compensates the processing time of said sound control unit.

17. A method for switching or sliding from a digital signal to an analogue signal and vice versa in a receiver, with said two signals being received simultaneously, whereby the same audio program is transmitted simultaneously via said two signals, and whereby said switching is performed in dependence of the reception situation in order to select either said digital signal or said analogue signal as the major source of the receiver's audio output signal (32),
**characterized by**
- a further step of modifying the audio bandwidth of said digital signal in dependence of the reception situation,
- wherein the audio bandwidth of said digital signal is decreased with decreasing reception quality of said digital signal.

18. Method according to claim 17,
**characterized in that**
said analogue signal and said digital signal are transmitted via the same transmission channel, as a simulcast signal.

19. Method according to claim 17 or 18,
**characterized by**
switching, in case the signal quality of said digital signal falls below a first predefined quality level, from said digital signal to said analogue signal as the major source of said audio output signal.

20. Method according to any one of claims 17 to 19,
**characterized by**
switching, in case the signal quality of said digital signal surpasses a second predefined quality level, from said analogue signal to said digital signal as the major source of said audio output signal.

21. Method according to any one of claims 17 to 20,
**characterized in that**
said switching is performed by continuously varying the mixing ratio according to which said two signals contribute to the audio output signal.

22. Method according to any one of claims 17 to 21,
**characterized by**
reducing the audio bandwidth of said digital signal in case the error rate of said digital signal exceeds a predefined threshold.

23. Method according to any one of claims 17 to 22,
**characterized by**
reducing the audio bandwidth of said digital signal in case of frequent occurrence of switching.

24. Method according to any one of claims 17 to 23,
**characterized by**
outputting, in case of frequent occurrence of switching, a mixed signal obtained by combining said digital signal and said analogue signal instead of said digital signal when the receiver switches back to said digital signal as the major source of said audio output signal.

25. Method according to any one of claims 17 to 24,
**characterized in that** the
audio bandwidth of said digital signal is modified by filtering said digital signal, whereby the upper cut-off frequency is varied as a function of the reception situation.

26. Method according to any one of claims 17 to 25,
**characterized by**
modifying the audio bandwidth of said digital signal in a sliding transition according to a ramp function.

27. Computer program product,
comprising a program stored on a carrier which when executed in a general purpose computer or a digital signal processor causes it to carry out the method as defined in anyone of claims 17 to 26.

## Patentansprüche

1. Empfänger,
zum gleichzeitigen Empfangen eines digitalen Signals und eines analogen Signals, wodurch dasselbe Audioprogramm simultan mittels der zwei Signale übermittelt wird,
mit:
- einer Demodulationseinrichtung (4) zum Demodulieren des analogen Signals,
- einer Decodiereinrichtung (5) zum Decodieren des digitalen Signals,
- einer Schalteinrichtungen (30) zum Schalten oder zum gleitenden Übergehen vom digitalen Signal zum analogen Signal und umgekehrt, und zwar in Abhängigkeit von der Empfangssituation, um entweder das digitale Signal oder das analoge Signal als Hauptquelle für das Audioausgabesignal (32) des Empfängers auszuwählen,
**gekennzeichnet durch**
- eine Schallsteuereinheit (29) zum Modifizieren der Audiobandbreite des digitalen Signals, und zwar als Funktion der Empfangssituation,
- wobei die Schallsteuereinheit (29) ausgebildet ist, die Audiobandbreite des digitalen Signals mit sinkender Empfangsqualität des digitalen Signals abzusenken.

2. Empfänger nach Anspruch 1,
welcher ausgebildet ist, das analoge Signal und das digitale Signal über denselben Übertragungskanal als Simulcastsignal zu empfangen.

3. Empfänger nach einem der Ansprüche 1 oder 2,
welcher ausgebildet ist, zum analogen Signal als Hauptquelle für das Audioausgabesignal umzuschalten, und zwar in dem Fall, dass das digitale Signal als Hauptquelle für das Audioausgabesignal ausgewählt wurde und die Signalqualität des digitalen Signals unter ein vorgegebenes erstes Qualitätsniveau abfällt.

4. Empfänger nach einem der vorangehenden Ansprüche,
welcher ausgebildet, auf das digitale Signal als Hauptquelle für das Audioausgabesignal umzuschalten, und zwar in dem Fall, dass das analoge Signal als Hauptquelle für das Audioausgabesignal ausgewählt wurde und die Signalqualität des digitalen Signals ein vorgegebenes zweites Qualitätsniveau überschreitet.

5. Empfänger nach einem der vorangehenden Ansprüche,
**dadurch gekennzeichnet,**
**dass** die Schalteinrichtungen ausgebildet sind, um vom digitalen Signal zum analogen Signal und vom analogen Signal zurück zum digitalen Signal umzuschalten, und zwar in Form eines gleitenden Übergangs durch kontinuierliches Variieren des Mischverhältnisses, gemäß welchem die zwei Signale zum Audioausgabesignal beitragen.

6. Empfänger nach einem der vorangehenden Ansprüche,
bei welchem die Schallsteuereinheit ausgebildet ist, die Audiobandbreite des digitalen Signals in dem Fall zu reduzieren, in welchem die Fehlerrate des digitalen Signals einen vorgegebenen Grenzwert überschreitet.

7. Empfänger nach einem der vorangehenden Ansprüche,
bei welchem die Schallsteuereinheit ausgebildet ist, die Audiobandbreite des digitalen Signals in dem Fall zu reduzieren, bei welchem ein häufiges Umschalten auftritt.

8. Empfänger nach einem der vorangehenden Ansprüche,
welcher dazu ausgebildet ist, ein gemischtes Signal auszugeben, welches erhalten wird durch Kombinieren des digitalen Signals und des analogen Signals, und zwar anstelle des digitalen Signals in dem Fall, bei welchem ein häufiges Umschalten auftritt, falls der Empfänger zum digitalen Signal als Hauptquelle für das Audioausgabesignal zurückschaltet.

9. Empfänger nach einem der vorangehenden Ansprüche,
welcher dazu ausgebildet ist, die Audiobandbreite des digitalen Signals in einem gleitenden Übergang zu einer Rampenfunktion hin zu modifizieren.

10. Empfänger nach einem der vorangehenden Ansprüche,
**dadurch gekennzeichnet,**
**dass** die Schallsteuereinheit eine abstimmbare Bandbreitenfiltereinrichtung aufweist, wobei eine obere Cutoff-Frequenz der Filtereinrichtung variabel ausgebildet ist, und zwar als Funktion der Empfangssituation.

11. Empfänger nach Anspruch 10,
**dadurch gekennzeichnet,**
**dass** die Filtereinrichtung als IIR-Filtereinrichtung implementiert ist, wobei die Filterkoeffizienten variabel ausgebildet sind, und zwar als Funktion der Empfangssituation.

12. Empfänger nach Anspruch 10,
**dadurch gekennzeichnet,**
**dass** die Filtereinrichtung eine erste komplexe Mischeinrichtung, eine erste komplexe Tiefpassfiltereinrichtung, eine zweite komplexe Mischeinrichtung, eine zweite komplexe Tiefpassfiltereinrichtung sowie eine dritte komplexe Mischeinrichtung aufweist.

13. Empfänger nach Anspruch 10,
**dadurch gekennzeichnet,**
**dass** die Filtereinrichtung eine einzige Seitenbandreduktionseinheit (38), eine Frequenzverschiebeeinrichtung (36), einen Tiefpassfilter (35) sowie eine zweite Frequenzverschiebeeinrichtung (37) aufweist.

14. Empfänger nach einem der vorangehenden Ansprüche,
**gekennzeichnet durch**
eine Zeitanordnungseinrichtung (8) zum Kompensieren jeglicher zeitlicher Verzögerung zwischen dem Analogsignal und dem Digitalsignal, um eine Zeitanordnung oder Zeitausrichtung der beiden Signale zu erreichen.

15. Empfänger nach einem der vorangehenden Ansprüche,
**gekennzeichnet durch**
eine Amplitudenanpassungseinrichtung (15) zum Skalieren der jeweiligen Amplituden des analogen Signals und des digitalen Signals derart, dass diese gleich sind.

16. Empfänger nach einem der vorangehenden Ansprüche,
**gekennzeichnet durch**
eine Zeitverzögerungseinheit (31) zum Verzögern des analogen Signals um einen Betrag, welcher die Verarbeitungszeit in Bezug auf die Schallsteuereinheit kompensiert.

17. Verfahren zum Umschalten oder zum gleitenden Übergehen von einem digitalen Signal zu einem analogen Signal und umgekehrt in einem Empfänger, wobei die zwei Signale gleichzeitig empfangen werden, wobei durch die beiden Signale simultan dasselbe Audioprogramm übertragen wird und wobei das Umschalten oder gleitende Übergehen durchgeführt wird in Abhängigkeit von der Empfangssituation, um entweder das digitale Signal oder aber das analoge Signal als Hauptquelle für das Audioausgangssignal (32) des Empfängers auszuwählen,
**gekennzeichnet durch**
- einen weiteren Schritt des Modifizierens der Audiobandbreite des digitalen Signals in Abhängigkeit von der Empfangssituation,
- wobei die Audiobandbreite des digitalen Signals abgesenkt wird mit einer sinkenden Empfangsqualität des digitalen Signals.

18. Verfahren nach Anspruch 17,
**dadurch gekennzeichnet,**
**dass** das analoge Signal und das digitale Signal über denselben Übertragungskanal übertragen werden, und zwar als Simulcastsignal.

19. Verfahren nach einem der Ansprüche 17 oder 18,
**gekennzeichnet durch**
ein Umschalten in dem Fall, bei welchem die Signalqualität des digitalen Signals unter ein vorgegebenes erstes Qualitätsniveau abfällt, von dem digitalen Signal zum analogen Signal als Hauptquelle des Audioausgabesignals.

20. Verfahren nach einem der vorangehenden Ansprüche 17 bis 19,
**gekennzeichnet durch**
ein Schalten in dem Fall, bei welchem die Signalqualität des digitalen Signals unter ein zweites vorgegebenes Qualitätsniveau überschreitet, vom analogen Signal zum digitalen Signal als Hauptquelle des Audioausgangssignals.

21. Verfahren nach einem der vorangehenden Ansprüche 17 bis 20,
**dadurch gekennzeichnet,**
**dass** das Umschalten durchgeführt wird durch kontinuierliches Variieren des Mischverhältnisses, gemäß welchem die zwei Signale zum Audioausgabesignal beitragen.

22. Verfahren nach einem der vorangehenden Ansprüche 17 bis 21,
**gekennzeichnet durch**
ein Reduzieren der Audiobandbreite des digitalen Signals in dem Fall, bei welchem die Fehlerrate des digitalen Signals einen vorgegebenen Grenzwert überschreitet.

23. Verfahren nach einem der vorangehenden Ansprüche 17 bis 22,
**gekennzeichnet durch**
ein Reduzieren der Audiobandbreite des digitalen Signals in dem Fall, bei welchem ein häufiges Auftreten des Schaltens vorliegt.

24. Verfahren nach einem der vorangehenden Ansprüche 17 bis 23,
**gekennzeichnet durch**
ein Ausgeben in dem Fall, bei welchem ein häufiges Auftreten eines Schaltens vorliegt, und zwar eines gemischten Signals, welches erhalten wird oder erhalten wird **durch** Kombinieren des digitalen Signals und des analogen Signals, und zwar anstelle des digitalen Signals, wenn der Empfänger zurückschaltet zum digitalen Signal als Hauptquelle des Audioausgangssignals.

25. Verfahren nach einem der vorangehenden Ansprüche 17 bis 24,
**dadurch gekennzeichnet,**
**dass** die Audiobandbreite des digitalen Signals modifiziert wird durch Filtern des digitalen Signals, wobei die obere Cutoff-Frequenz variiert wird in Funktion der Empfangssituation.

26. Verfahren nach einem der vorangehenden Ansprüche 17 bis 25,
**gekennzeichnet durch**
ein Modifizieren der Audiobandbreite des digitalen Signals in einem gleitenden Übergang, und zwar gemäß einer Rampenfunktion.

27. Computerprogrammprodukt
welches ein Programm aufweist, welches auf einem Träger gespeichert ist, welches ausgeführt wird auf einem gewöhnlichen Computer oder einem digitalen Signalprozessor und welches dabei ein Ablaufen des in den vorangehenden Ansprüchen 17 bis 26 definierten Verfahrens bewirkt.

## Revendications

1. Récepteur pour recevoir de façon simultanée un signal numérique et un signal analogique et ainsi, le même programme audio est transmis de façon simultanée via lesdits deux signaux, comprenant :
un moyen de démodulation (4) pour démoduler ledit signal analogique ;
un moyen de décodage (5) pour décoder ledit signal numérique ;
un moyen de commutation (30) pour réaliser une commutation ou un glissement depuis ledit signal numérique sur ledit signal analogique et vice versa en fonction de la situation de réception afin de sélectionner soit ledit signal numérique, soit ledit signal analogique en tant que source essentielle du signal de sortie audio de récepteur (32),
**caractérisé par** :
une unité de commande de son (29) pour modifier la largeur de bande audio dudit signal numérique en fonction de la situation de réception,
dans lequel ladite unité de commande de son (29) est adaptée afin de diminuer la largeur de bande audio du signal numérique lorsque la qualité de réception dudit signal numérique décroît.

2. Récepteur selon la revendication 1, qui est adapté pour recevoir ledit signal analogique et ledit signal numérique via le même canal de transmission, en tant que signal de diffusion simultanée.

3. Récepteur selon la revendication 1 ou 2, qui est adapté pour réaliser une commutation sur ledit signal analogique en tant que source essentielle dudit signal de sortie audio dans le cas où le signal numérique est sélectionné en tant que source essentielle dudit signal de sortie audio et que la qualité de signal du signal numérique chute au-dessous d'un premier niveau de qualité prédéfini.

4. Récepteur selon l'une quelconque des revendications précédentes, qui est adapté pour réaliser une commutation sur ledit signal numérique en tant que source essentielle dudit signal de sortie audio dans le cas où le signal analogique est sélectionné en tant que source essentielle dudit signal de sortie audio et que la qualité de signal du signal numérique surpasse un second niveau de qualité prédéfini.

5. Récepteur selon l'une quelconque des revendications précédentes, **caractérisé en ce que** ledit moyen de commutation est adapté pour réaliser une commutation depuis ledit signal numérique sur ledit signal analogique et depuis ledit signal analogique en retour sur ledit signal numérique selon une transition glissante en faisant varier en continu le rapport de mélange conformément auquel lesdits deux signaux contribuent audit signal de sortie audio.

6. Récepteur selon l'une quelconque des revendications précédentes, dans lequel ladite unité de commande de son est adaptée pour réduire la largeur de bande audio dudit signal numérique dans le cas où le taux d'erreurs dudit signal numérique excède un seuil prédéfini.

7. Récepteur selon l'une quelconque des revendications précédentes, dans lequel ladite unité de commande de son est adaptée pour réduire la largeur de bande audio dudit signal numérique dans le cas d'une survenue fréquente de commutations.

8. Récepteur selon l'une quelconque des revendications précédentes, qui est adapté pour émettre en sortie un signal mélangé qui est obtenu en combinant ledit signal numérique et ledit signal analogique en lieu et place dudit signal numérique dans le cas d'une survenue fréquente de commutations, lorsque le récepteur réalise une commutation en retour sur ledit signal numérique en tant que source essentielle dudit signal de sortie audio.

9. Récepteur selon l'une quelconque des revendications précédentes, qui est adapté pour modifier la largeur de bande audio dudit signal numérique selon une transition glissante conformément à une fonction en rampe.

10. Récepteur selon l'une quelconque des revendications précédentes, **caractérisé en ce que** ladite unité de commande de son comprend un moyen de filtre de largeur de bande accordable et ainsi, la fréquence de coupure supérieure du moyen de filtre est variable en fonction de la situation de réception.

11. Récepteur selon la revendication 10, **caractérisé en ce que** ledit moyen de filtre est mis en oeuvre en tant que moyen de filtre IIR et ainsi, les coefficients de filtre sont variables en fonction de la situation de réception.

12. Récepteur selon la revendication 10, **caractérisé en ce que** ledit moyen de filtre comprend un premier mélangeur complexe, un premier filtre passe-bas complexe, un second mélangeur complexe, un second filtre passe-bas complexe et un troisième mélangeur complexe.

13. Récepteur selon la revendication 10, **caractérisé en ce que** ledit moyen de filtre comprend une unité de réduction de bande latérale unique (38), un premier décaleur de fréquence (36), un filtre passe-bas (35) et un second décaleur de fréquence (37).

14. Récepteur selon l'une quelconque des revendications précédentes, **caractérisé par** un moyen d'alignement de temps (8) pour compenser un quelconque retard temporel entre le signal analogique et le signal numérique afin de réaliser un alignement de temps des deux signaux.

15. Récepteur selon l'une quelconque des revendications précédentes, **caractérisé par** un moyen de réglage d'amplitude (15) pour mettre à l'échelle les amplitudes respectives dudit signal analogique et dudit signal numérique de telle sorte qu'elles soient égales.

16. Récepteur selon l'une quelconque des revendications précédentes, **caractérisé par** une unité de retard temporel (31) pour retarder le signal analogique d'une valeur qui compense le temps de traitement de ladite unité de commande de son.

17. Procédé pour réaliser une commutation ou un glissement depuis un signal numérique sur un signal analogique et vice versa dans un récepteur, lesdits deux signaux étant reçus de façon simultanée et ainsi, le même programme audio est transmis de façon simultanée via lesdits deux signaux et ainsi, ladite commutation est réalisée en fonction de la situation de réception afin de sélectionner soit ledit signal numérique, soit ledit signal analogique en tant que source essentielle du signal de sortie audio de récepteur (32),
**caractérisé par** une étape supplémentaire de modification de la largeur de bande audio du signal numérique en fonction de la situation de réception, où la largeur de bande audio dudit signal numérique est diminuée lorsque la qualité de réception dudit signal numérique décroît.

18. Procédé selon la revendication 17, **caractérisé en ce que** ledit signal analogique et ledit signal numérique sont transmis via le même canal de transmission en tant que signal de diffusion simultanée.

19. Procédé selon la revendication 17 ou 18, **caractérisé par** la commutation, dans le cas où la qualité de signal dudit signal numérique chute au-dessous d'un premier niveau de qualité prédéfini, depuis ledit signal numérique sur ledit signal analogique en tant que source essentielle dudit signal de sortie audio.

20. Procédé selon l'une quelconque des revendications 17 à 19, **caractérisé par** la commutation, dans le cas où la qualité de signal dudit signal numérique surpasse un second niveau de qualité prédéfini, depuis ledit signal analogique sur ledit signal numérique en tant que source essentielle dudit signal de sortie audio.

21. Procédé selon l'une quelconque des revendications 17 à 20, **caractérisé en ce que** ladite commutation est réalisée en faisant varier en continu le rapport de mélange conformément auquel lesdits deux signaux contribuent audit signal de sortie audio.

22. Procédé selon l'une quelconque des revendications 17 à 21, **caractérisé par** la réduction de la largeur de bande audio dudit signal numérique dans le cas où le taux d'erreurs dudit signal numérique excède un seuil prédéfini.

23. Procédé selon l'une quelconque des revendications 17 à 22, **caractérisé par** la réduction de la largeur de bande audio dudit signal numérique dans le cas d'une survenue fréquente de commutations.

24. Procédé selon l'une quelconque des revendications 17 à 23, **caractérisé par** l'émission en sortie, dans le cas d'une survenue fréquente de commutations, d'un signal mélangé qui est obtenu en combinant ledit signal numérique et ledit signal analogique en lieu et place dudit signal numérique lorsque le récepteur réalise une commutation en retour sur ledit signal numérique en tant que source essentielle dudit signal de sortie audio.

25. Procédé selon l'une quelconque des revendications 17 à 24, **caractérisé en ce que** la largeur de bande audio dudit signal numérique est modifiée en filtrant ledit signal numérique et ainsi, la fréquence de coupure supérieure est modifiée en fonction de la situation de réception.

26. Procédé selon l'une quelconque des revendications 17 à 25, **caractérisé par** la modification de la largeur de bande audio dudit signal numérique selon une transition glissante conformément à une fonction en rampe.

27. Produit de programme d'ordinateur comprenant un programme qui est stocké sur un support, lequel, lorsqu'il est exécuté dans un ordinateur à usage général ou dans un processeur de signal numérique, a pour effet que celui-ci met en oeuvre le procédé tel que défini selon l'une quelconque des revendications 17 à 26.
